# EUROPÄISCHE PATENTANMELDUNG

(11) **EP 1 420 147 A1**
(43) Veröffentlichungstag der Anmeldung: **19.05.2004**
(21) Anmeldenummer: 02025241.7
(22) Anmeldetag: 12.11.2002
(51) Int. Cl.: F01L 1/18, H02K 15/02, H01F 3/02, B21D 28/00

(54) **Aus miteinander verbundenen Lamellenstapeln bestehendes Werkstück**

(71) Anmelder: Schätti AG, 8762 Schwanden (CH)
(72) Erfinder: Schätti, Jos, 8762 Schwanden (CH)
(74) Vertreter: Wenger, René

(57) **Zusammenfassung**

Ein Werkstück (1) besteht aus gestapelten, miteinander verbundenen Lamellen (2) mit wenigstens einer Stapelschicht von Lamellen gleicher Aussenkonfiguration. Diese bilden wenigstens ein erstes Stapelpaket (3). Das erste Stapelpaket ist mit wenigstens einem zweiten Stapelpaket (4) fest verbunden, dessen Lamellen in einer Ebene angeordnet sind, die in einem Winkel zur Ebene der Lamellen des ersten Stapelpakets angeordnet ist. Auf diese Weise lassen sich kostengünstig relativ kompakte Werkstücke herstellen, die in verschiedenen Raumachsen Öffnungen (6), Nuten oder Hinterschneidungen aufweisen.

## Beschreibung

Die Erfindung betrifft ein Werkstück, bestehend aus gestapelten, miteinander verbundenen Lamellen gemäss dem Oberbegriff von Anspruch 1.

Die Herstellung von sogenannten Stanzpaketen ist beispielsweise in der Elektrotechnik bekannt und gebräuchlich, um Rotoren, Statoren oder Transformatoren herzustellen. Die einzelnen Lamellen werden dabei aus Blechstreifen ausgestanzt und unmittelbar beim Aufeinanderstapeln über eingeprägte Vertiefungen miteinander verrastet. Mit Hilfe dieser Technik können auch relativ komplizierte Innen- und Aussenkonfigurationen hergestellt werden. Auch das Herstellen von Stapeln mit Lamellen von unterschiedlicher Aussenkonfiguration ist bereits bekannt, um beispielsweise Durchbrüche oder Vorsprünge in den Stapel zu integrieren. Derartige Werkstücke bekannter Bauart sind beispielsweise in der DE 100 13 690 oder in der US 6 131 268 beschrieben. Ein Beispiel für die kontinuierliche Verbindungstechnik der einzelnen Lamellen miteinander ist in der US 4 979 285 beschrieben.

Ein Nachteil der bekannten Werkstücke besteht darin, dass sich die einzelnen Lamellen in der Ebene ihrer X- und Y-Achsen sehr genau konfigurieren lassen, dass jedoch der Formgebung in der Z-Achse im rechten Winkel zur Ebene der Lamellen enge Grenzen gesetzt sind. So lässt sich beispielsweise eine kreisrunde Öffnung, deren Mittelachse in der Ebene der Lamellen verläuft, praktisch nicht herstellen. Es ist daher eine Aufgabe der Erfindung, ein Werkstück der eingangs genannten Art zu schaffen, das unter Verwendung der Stanzstapeltechnik kostengünstig herstellbar ist, und das in allen drei Raumachsen den jeweiligen Anforderungen entsprechende Aussen- oder Innenkonturen aufweisen kann. Ausserdem sollen die mechanischen Eigenschaften des Werkstücks verbessert werden.

Diese Aufgabe wird erfindungsgemäss mit einem Werkstück gelöst, das die Merkmale im Anspruch 1 aufweist. Es hat sich überraschend gezeigt, dass die Verbindung einzelner Stapelpakete, deren Lamellen in unterschiedlichen Ebenen zueinander angeordnet sind, zu ausserordentlich vorteilhaften Werkstücken mit filigranen Strukturen führt. Dabei lassen sich spanabhebende Herstellungsverfahren äusserst kostengünstig substituieren. Die mechanischen Eigenschaften dieser geschichteten Werkstücke sind monolithischen Werkstücken sogar teilweise noch überlegen. Ausserdem können bei entsprechender Anordnung die Grenzen überwunden werden, die normalerweise beim Stanzen im Hinblick auf den zulässigen Randabstand gesetzt sind.

Besonders vorteilhaft lassen sich die beiden Stapelpakete zusammensetzen und miteinander verbinden, wenn ihre Ebenen im rechten Winkel zueinander verlaufen. Andere Relativlagen wären aber ohne weiteres denkbar.

Eine besonders kompakte und verwindungssteife Anordnung ergibt sich, wenn das zweite Stapelpaket in eine Ausnehmung des ersten Stapelpakets eingesetzt ist. Dabei kann es sich ersichtlicherweise um eine Ausnehmung handeln, welche in der Ebene oder quer zur Ebene der einzelnen Lamellen des ersten Stapelpakets verläuft. Das zweite Stapelpaket kann dabei eine Öffnung aufweisen, die sich durch wenigstens einen Teil der Lamellen des zweiten Stapelpakets erstreckt. So könnte beispielsweise das zweite Stapelpaket eine kreisrunde Öffnung bilden, die beispielsweise als Drehlager für eine Achse dient.

Vorzugsweise werden die beiden Stapelpakete mittels einer unlösbaren Verbindung miteinander verbunden. Denkbar wäre beispielsweise Schweissen (Widerstandsschweissen), Löten, Kleben oder Nieten.

Weitere Vorteile können erzielt werden, wenn die beiden Stapelpakete aus unterschiedlichen Werkstoffen bestehen. Dabei können beispielsweise besondere Werkstoffeigenschaften, wie z.B. diejenigen von Messing für die Bildung von Gleitlagern, ausgenützt werden. Auch eine Oberflächenvergütung durch Beschichtung ist besonders vorteilhaft, weil die Struktur der Lamellenschicht an der Oberfläche die Haftung begünstigt bzw. durch Kapillarwirkung ein teilweises Eindringen der Beschichtungssubstanz ermöglicht wird. So kann z.B. auf bekannte Art und Weise ein Kupferlot-Auftrag erfolgen, um die Laufeigenschaften zu verbessern. Denkbar wären auch Pulverbeschichtungen.

Ausführungsbeispiele der Erfindung sind in den Zeichnungen dargestellt und werden nachstehend genauer beschrieben. Es zeigen:
- Figur 1: Eine perspektivische Darstellung eines ersten Werkstücks bestehend aus zwei aneinander anstossende Stapelpaketen,
- Figur 2: eine perspektivische Darstellung eines zweiten Werkstücks bestehend aus zwei einander durchdringenden Stapelpaketen,
- Figur 3: eine perspektivische Darstellung eines dritten Werkstücks bestehend aus zwei aneinander anstossende Stapelpaketen,
- Figur 4: eine perspektivische Darstellung eines vierten Werkstücks bestehend aus drei Stapelpaketen vor dem Zusammensetzen,
- Figur 5: das Werkstück gemäss Figur 4 im zusammengesetzten Zustand, und
- Figur 6: eine perspektivische Darstellung eines vierten Werkstücks bestehend aus drei Stapelpaketen.

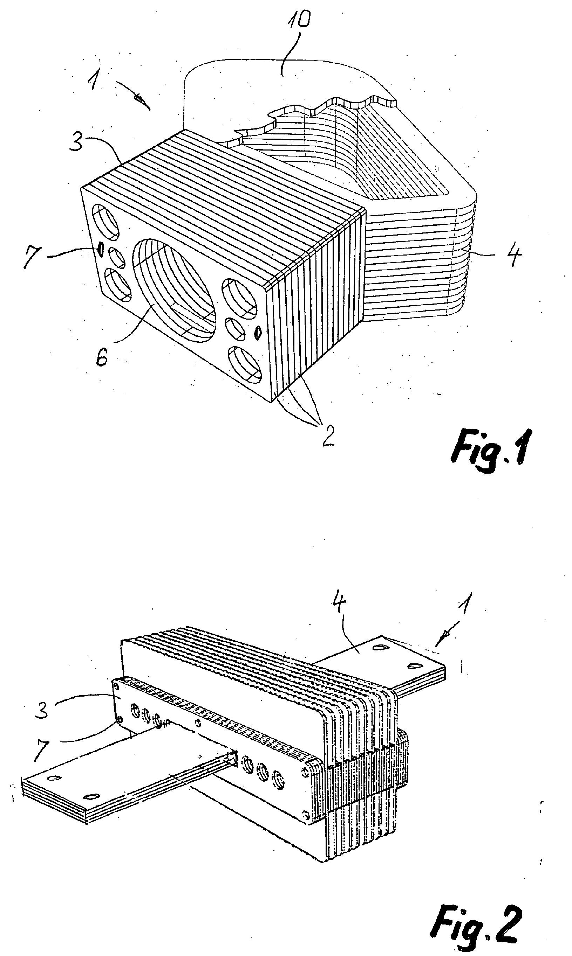

Gemäss Figur 1 besteht das Werkstück 1 aus den beiden Stapelpaketen 3 und 4, von denen jede aus einzelnen Blechlamellen 2 besteht. Mit dem Bezugszeichen 7 sind die Verbindungsprägungen oder Rastnasen angedeutet, welche den ganzen Stapel zusammenhalten. Der erste Stapel 3 ist mit verschiedenen Öffnungen 6 versehen. Der zweite Stapel 4 besteht aus einzelnen Rahmen, die auf einer Seite mit einer geschlossenen Decklamelle 10 versehen sind. Die Ebene der Lamellen im ersten Stapelpaket 3 verläuft im rechten Winkel zur Ebene der Lamellen des zweiten Stapelpakets 4. Die Höhe des zweiten Stapelpakets 4 entspricht der Breite der Lamellen 2 des ersten Stapelpakets 3.

Beim Werkstück gemäss dem Ausführungsbeispiel in Figur 2 handelt es sich um ein relativ kompliziertes Teil, bei dem das erste Stapelpaket 3 jeweils aus Lamellen mit unterschiedlicher Aussenkonfiguration zusammengesetzt ist. Dabei ergibt sich ein kammartiger Querschnitt. Das erste Stapelpaket 3 ist vom zweiten Stapelpaket 4 durchdrungen, welches lediglich aus einem dünnen, etwa rechteckigen Stapel besteht.

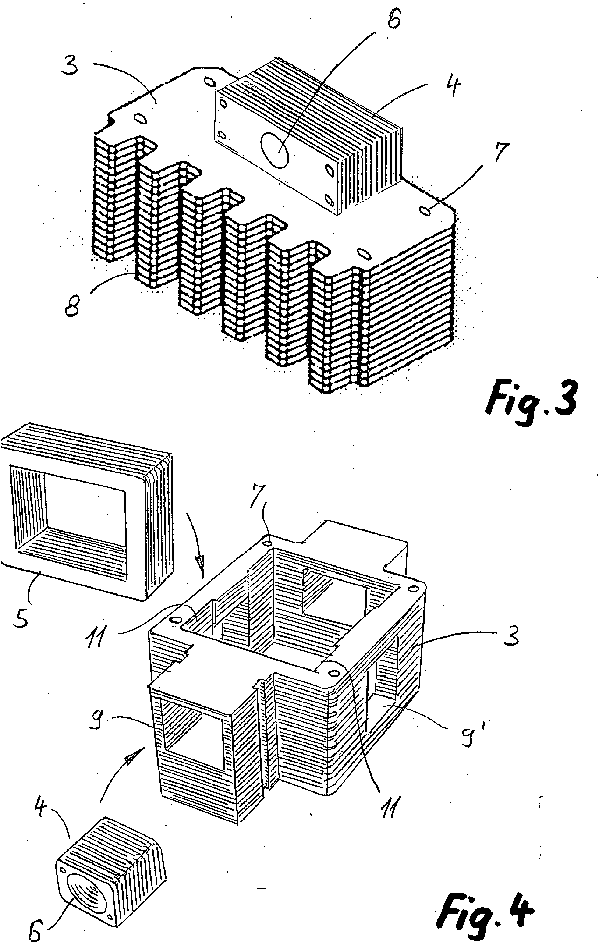

Beim Werkstück gemäss dem Ausführungsbeispiel in Figur 3 bildet das erste Stapelpaket eine Zahnstange mit Zähnen 8 an einer Längsseite. Die Form der Zähne lässt sich dabei sehr präzise ausstanzen. Auf der Oberfläche des ersten Stapelpakets 3 ist das zweite Stapelpaket 4 mit einer Öffnung 6 aufgelötet, welches beispielsweise der Befestigung der Zahnstange dient.

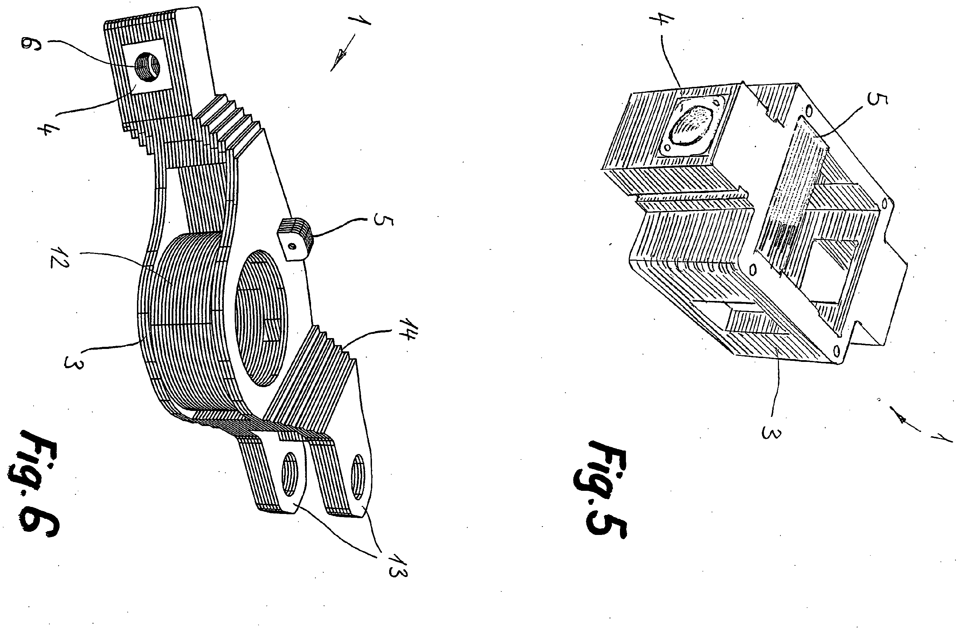

Beim Ausführungsbeispiel gemäss Figur 4 bildet das erste Stapelpaket 3 ein rahmenartiges Gebilde mit rechteckigen Öffnungen 9 bzw. 9' in den Seiten. Das zweite Stapelpaket 4 besteht aus rechteckigen Lamellen, welche ausschliesslich eine Öffnung 6 bilden. Die Aussenform des zweiten Stapelpakets 4 ist so dimensioniert, dass sie in die Öffnung 9 passt.

Ein drittes Stapelpaket 5 besteht ebenfalls aus einem rahmenartigen Gebilde, das in die inneren Nuten 11, 11' am ersten Stapelpaket 3 eingeschoben werden kann.

Figur 5 zeigt die zusammengesetzten und beispielsweise durch Kleben oder Löten fest miteinander verbundenen Stapelpakete 3, 4 und 5. Ersichtlicherweise wäre ein derartiges Werkstück mit einem spanabhebenden Arbeitsverfahren wenn überhaupt, dann nur mit einem sehr hohen Arbeitsaufwand herstellbar.

Figur 6 zeigt einen Kipphebel für einen Verbrennungsmotor, nämlich für einen Lastwagen-Dieselmotor. Das filigrane Werkstück besteht aus den Stapelpaketen 3, 4 und 5 in unterschiedlichen Relativlagen, wobei das Stapelpaket 3 aus mehreren Schichten mit unterschiedlicher Aussenkonfiguration besteht. An den Hohlzylinder 12 sind auf beiden Seiten die Laschen 13 angeschlossen. Die Übergänge sind als Abstufungen 14 ausgebildet. Auf ähnliche Weise könnten auch andere Kipphebel für die Ventilsteuerung an Verbrennungsmotoren hergestellt werden.

Der Ausgestaltung der Werkstücke unter Einhaltung der erfindungsgemässen Lehre sind praktisch keine Grenzen gesetzt. Damit können mit dem Stanzpaketierverfahren hergestellte Teile nicht nur für elektrotechnische Bauteile, sondern praktisch in allen Bereichen eingesetzt werden. Besonders vorteilhaft ist der Einsatz in Produkten, bei denen relativ grosse Serien erforderlich sind, wie z.B. im Automobilbau oder bei Vorrichtungen im Bereich Haushalttechnik, wie z.B. Waschmaschinen, Liegemöbel und dergleichen mehr.

## Patentansprüche

1. Werkstück (1) bestehend aus gestapelten, miteinander verbundenen Lamellen (2), mit wenigstens einer Stapelschicht von Lamellen gleicher Aussenkonfiguration, welche wenigstens ein erstes Stapelpaket (3) bilden, **dadurch gekennzeichnet, dass** das erste Stapelpaket (3) mit wenigstens einem zweiten Stapelpaket (4) fest verbunden ist, dessen Lamellen in einer Ebene angeordnet sind, die in einem Winkel zur Ebene der Lamellen des ersten Stapelpakets angeordnet ist.

2. Werkstück nach Anspruch 1, **dadurch gekennzeichnet, dass** die Ebene der Lamellen des zweiten Stapelpakets (4) in einem Winkel von 90° Grad zur Ebene der Lamellen des ersten Stapelpakets (3) angeordnet ist.

3. Werkstück nach einem der Ansprüche 1 oder 2, **dadurch gekennzeichnet, dass** das zweite Stapelpaket (4) in eine Ausnehmung des ersten Stapelpakets (3) eingesetzt ist.

4. Werkstück nach einem der Ansprüche 1 bis 3, **dadurch gekennzeichnet, dass** das zweite Stapelpaket (4) eine Öffnung (6) aufweist, die sich durch wenigstens einen Teil der Lamellen erstreckt.

5. Werkstück nach Anspruch 4, **dadurch gekennzeichnet, dass** die Öffnung kreisförmig bzw. zylindrisch ist.

6. Werkstück nach einem der Ansprüche 1 bis 5, **dadurch gekennzeichnet, dass** die beiden Stapelpakete (3, 4) mittels einer unlösbaren Verbindung verbunden sind.

7. Werkstück nach einem der Ansprüche 1 bis 6, **dadurch gekennzeichnet, dass** das erste Stapelpaket (3) und das zweite Stapelpaket (4) aus unterschiedlichen Werkstoffen bestehen.

8. Werkstück nach einem der Ansprüche 1 bis 7, **dadurch gekennzeichnet, dass** es mit einer Oberflächenbeschichtung, insbesondere mit einem Kupferlot-Auftrag versehen ist.

9. Kipphebel für die Ventilsteuerung an einem Verbrennungsmotor hergestellt als Werkstück nach einem der Ansprüche 1 bis 8.
